Europäisches Patentamt

European Patent Office

Office européen des brevets

(19)

(11) Veröffentlichungsnummer: **0 243 384**
**B1**

(12) # EUROPÄISCHE PATENTSCHRIFT

(45) Veröffentlichungstag der Patentschrift: **14.03.90**

(21) Anmeldenummer: **86905712.5**

(22) Anmeldetag: **17.10.86**

(86) Internationale Anmeldenummer:
**PCT/CH86/00146**

(87) Internationale Veröffentlichungsnummer:
**WO 87/02596 07.05.87 Gazette 87/10**

(51) Int. Cl.⁵: **B 01 D 35/00, C 22 B 21/06,
C 22 B 9/02**

(54) **VORRICHTUNG ZUM FILTRIEREN VON SCHMELZFLÜSSIGEN METALLEN.**

(30) Priorität: **25.10.85 US 791604**

(43) Veröffentlichungstag der Anmeldung:
**04.11.87 Patentblatt 87/45**

(45) Bekanntmachung des Hinweises auf die
Patenterteilung:
**14.03.90 Patentblatt 90/11**

(84) Benannte Vertragsstaaten:
**AT BE CH DE FR GB IT LI LU NL SE**

(56) Entgegenhaltungen:
**GB-A- 159 458
US-A-1 358 595
US-A-2 561 507
US-A-3 674 148
US-A-4 277 281
US-A-4 394 271
US-A-4 444 377**

(73) Patentinhaber: **Schweizerische Aluminium AG
CH-8212 Neuhausen am Rheinfall (CH)**

(72) Erfinder: **HEAMON, Mark, L.
Route 7, Box 50A
Hendersonville, NC 28739 (US)**

Courier Press, Leamington Spa, England.

EP 0 243 384 B1

**Beschreibung**

Die Erfindung betrifft eine Vorrichtung zur Filtration von schmelzflüssigem Metall durch eine Filterkammer in einem Filtertrog mit einem Metalleinlass und einem Metallauslass, wenigstens einem entfernbaren, den Konturen der Filterkammer angepassten, zwischen dem Metalleinlass und Metallauslass vertikal angeordneten Filtriereinsatz, welcher einen festen plattenartigen, dem schmelzflüssigen Metall widerstehenden und den Fliessweg des Metalls blockierenden Teil und einen darin angebrachten porösen Filterteil, der den Durchfluss des schmelzflüssigen Metalles ermöglicht, enthält, sowie die Verwendung der Vorrichtung.

Eine derartige Vorrichtung ist aus der US—A— 4 444 377 bekannt.

Geschmolzenes Metall, insbesondere Aluminium, enthält ganzallgemein mitgeschleppte Feststoffe, die sich im fertigen Metallgussstück schädigend auswirken. Diese mitgeschleppten Feststoffe erscheinen als Einschlüsse im fertigen Gussstück nach dem Erstarren des geschmolzenen Metalls, und verursachen ein weniger duktiles Endprodukt oder führen zu Endprodukten mit schlechten Glanzeigenschaften und schlechten Anodisierungscharakteristiken. Die Einschlüsse können von verschiedenen Quellen stammen, z.B. können die Einschlüsse von oberflächichen Oxidfilmen stammen, die aufbrachen und ins schmelzflüssige Metall gelangten. Weiter können die Einschlüsse unlösliche Verunreinigungen wie Karbide, Boride und andere sein, oder abgebröckelte Ofen- und Gussrinen-Feuerfestmaterialien.

Poröse keramische Schaummaterialien sind bekannt als besonders geeignet für die Filtration von schmelzflüssigem Metall, wie beschrieben in der US—A—3 893 917, US—A—3 947 363, US—A—4 081 371 und US—A—4 024 056. Diese keramischen Schaummaterialien sind besonders geeignet zum Filtrieren von schmelzflüssigem Metall aus verschiedenen Gründen. Zu denen gehören deren ausgezeichnete Filterwirksamkeit, niederige Kosten, leichte Anwendung und die Möglichkeit der Anwendung auf der Basis des Einmalgebrauchs. Die Tatsache, dass diese keramischen Schaummaterialien leicht und billig herzustellen sind und auf einer Einmalgebrauch- und Wegwerfbasis angewendet werden, verlangten die Entwicklung von Vorrichtungen für ein leichtes und bequemes Zusammenfügen und Entfernen der porösen Filter für schmelzflüssige Metalle aus einer Filtrationseinheit, die gleichzeitig eine hochwirksame Filtrationsvorrichtung darstellen soll.

Da die Filter als Wegwerfgegenstand ausgelegt sind, ist es wichtig, eine Vorrichtung zum richtigen Plazieren der Filter in einer Halterung zur Verfügung zu haben, die ein leichtes Zusammenfügen und Auseinandernehmen erlaubt. Der Halter oder die Filterkammer selbst ist normalerweise ein integrierter Bestandteil eines Troges, einer Giesspfanne oder Tiegels und sollte aus feuerfestem Material, das geschmolzenem Metall widersteht und gleichartig den Materialien für übliche Trogkonstruktionen ist, bestehen. Die Filterplatte ist normalerweise unter Verwendung einer elastischen Dichtung oder einer Dichtung in der Art einer Pakkung, welche an den Randflächen der Filterplatte angebracht ist, dichtend eingepasst. Um die Filterplatte wirksam in der Filterkammer anzuordnen, wurde nach dem Stand der Technik eine abgeschrägte Schmalseite an der Filterplatte verlangt, an welcher die Dichtung angebracht wurde. Die Filterplatte wurde dann dichtend eingesetzt, indem ein vertikaler Druck nach unten auf die in die Filterkammer mit entsprechend abgeschrägten Randflächen eingesetzte Filterplatte ausübt wurde. Es wurde gefunden, dass als Resultat der auf die Filterplatte während des Einsetzen in die Filterkammer ausgeübten Kräfte Schäden an der Filterplatte auftraten, die widerum zu Metalldurchbrüchen und/oder ungenügender Metallfiltration führten. Entsprechend wurde auchgefunden, dass beim Entfernen der Filterplatte Schwierigkeiten auftraten. Weiter ist in Filtrationsvorrichtungen, wie sie üblicherweise angewendet werden, die Filterplatte horizontal in der Filterkammer angeordnet. Diese horizontale Anordnung führt zu einem beachtlichen Raumbedarf innerhalb der Metallverarbeitungslinie. Es ist deshalb wünschenswert, eine Filtrationsvorrichtung zur Verfügung zu haben, in der die Filterplatte vertikal angeordnet werden kann, da die vertikale Anordnung zu einer raumsparenden Anordnung führt.

Vertikale Anordnungen von Filterplatten sind beispielsweise auch aus der US—A— 4 092 153 bekammt. Diese Patentschrift lehrt aber nur die Anwendung einer Filterplatte mit abgeschrägten Randflächen, passend zu den entsprechend abgeschrägten Randflächen in einer Filterkammer, so dass der Filter in gleicher Weise in die Kammer eingesetzt werden konnte wie bei horizontal angeordneten Filterplatten. Auch wenn die U.S.—A—4 092 153 und die US—A—4 444 377 die vertikal angeordnete Filterplatte beschreiben, so wurde dennoch gefunden, dass in der Praxis diese vertikalen Anordnungen nicht völlig befriedigend im Hinblick auf Probleme mit dem Einfrieren des Metalls und Problemen mit dem Austausch der gebrauchten Filterplatten worin. Entsprechend ist das Hauptmerkmal vorliegender Erfindung eine verbesserte Vorrichtung zur Filtration von schmelzflüssigem Metall für eine problemlose Anwendung im kommerziellen Rahmen.

Aufgabe der vorliegenden Erfindung ist es, die erwähnten Nachteile zu vermeiden.

Die Aufgabe wird erfindungsgemäss durch den kennzeichnenden Wortlaut des Anspruchs 1 gelöst. Weitere Ausgestaltungen der erfindungsgemässen Vorrichtung ergeben sich aus den Merkmalen der Ansprüche 2 bis 9.

Die erfindungsgemässe Vorrichtung wird bevorzugt zur Filtration von schmelzflüssigem Aluminium verwendet.

Ein zusätzliche vorteil vorliegender Erfindung ist, dass die Vorrichtung sich durch praktisches Einsetzen und Entfernen des Filtriereinsatzes auszeichnet.

Weitere Merkmale vorliegender Erfindung werden im Rahmen dieser Beschreibung näher erläutert.

Ueberraschenderweise wurde gefunden, dass die genannten Nachteile vermischen und die gewünschten Fortschritte mit vorliegener Erfindung erreicht werden können. In einer vorzugsweisen Ausführungsform hat der keramische Schaumfilter einen abgeschrägten Rand, um einen dichten Sitz mit dem entsprechend abgeschrägten Rand im soliden Teil zu gewährleisten.

Zweckmässig enthält die Filterkammer wenigstens zwei und vorzugsweise drei passende Teile längs an der Aussenseite der Filterkammer, die geeignet sind, wenigstens zwei Filtriereinsätze, welche den Gebrauch von zwei Filtriereinsätzen in Serie ermöglichen oder es erlauben, einen zweiten Filtriereinsatz einzusetzen und den ersten Filtriereinsatz auf einfache und leichte Art zu entfernen, beispielsweise ohne den Metallfluss zu unterbrechen. Es ist zweckmässig, eine Ablenkungsplatte passend in die Filterkammer zwischen den Filtriereinsatz und den Einlass vorzusehen, um das Metall gegen den Boden der Filterkammer zu drängen und zu vermeiden, dass aufschwimmende Einschlüsse den Filter erreichen.

Entsprechend der Menge pro Zeiteinheit des zu filtrierenden schmelzflüssigen Metalles kann die Grösse des porösen Filterteils passend in die entsprechende Oeffnung im Filtriereinsatz gewählt werden. Vorzugsweise beträgt die Menge der zu filtrierenden Schmelze 0.127 bis 1.27 cm³/cm² Filterfläche und Minute.

Weitere Ausführungsformen vorliegender Erfindung werden nachfolgend beschrieben.

Die vorliegende Erfindung und deren Ausführungsformen sind unter Einbezug der nachfolgenden Zeichnungen besser verständlich, wobei:

Fig. 1 eine perspektivische Ansicht mit der Ablenkplatte und entferntem Filtriereinsatz dargestellt,

Fig. 2 einen Ausschnitt der Filterkammer mit Ablenkplatte und eingesetztem Filtriereinsatz zeigt und in

Fig. 3 ein Ausschnitt entsprechend Fig. 2 mit zwei Filtriereinsätzen, in Serie angeordnet, dargestellt sind.

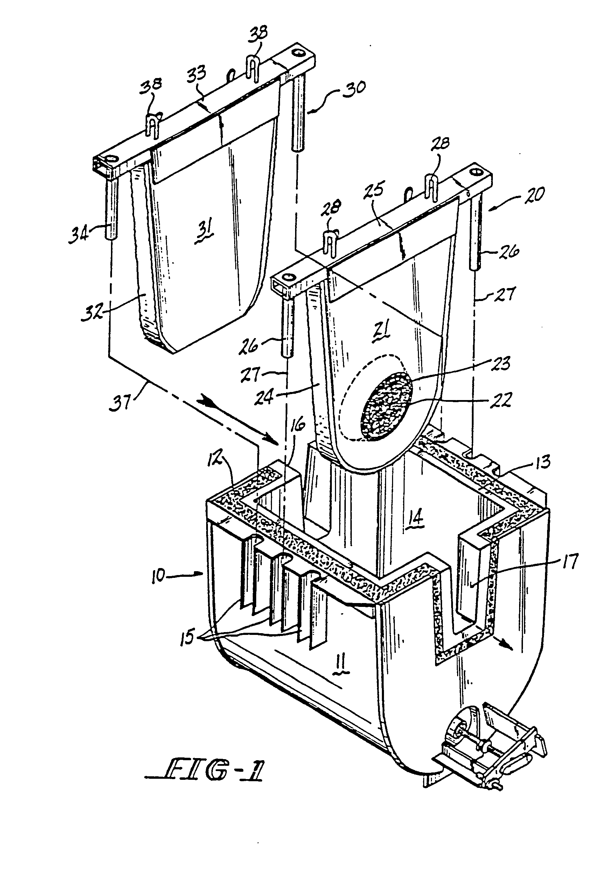

Unter Bezugnahme auf Fig. 1 ist der Filtertrog 10 zweckmässig mit einer äusseren Stahlhülle 11, einem Isolierkern 12 und einer metallbeständigen Ausfütterung 13, beispielsweise einer Keramik, welche die innere Filterkammer 14 begrenzt, ausgestattet. Die Filterkammer muss selbstverständlich gegenüber dem angewandten geschmolzenen Metall resistent sein, so dass zweckmässig eine Stahlhülle mit einer leichtgewichtigen Isolierschicht angewendet wird. Die Aufgabe des Filtertroges ist, das geschmolzene Metall aufzunehmen und den Fluss durch den Filter zu leiten. Die innere Ausgestaltung der Filterkammer passt sich der äusseren Ausgestaltung des Filtriereinsatzes und der Ablenkplatte an, wie nachfolgend beschrieben. Der Filtertrog 10 ist an seiner Aussenseite mit einer Aufnahmevorrichtung zur Aufnahme der Filtriereinsätze und der Ablenkplatte ausgestattet. Beispielsweise sind das drei aussen angebrachte Paare von Führungen 15, deren Funktion nachstehend beschrieben wird. Ebenso ist der Filtertrog mit einem Metalleinlass 16 und einem Metallauslass 17 ausgestattet, wobei die Richtung des Metallflusses durch Pfeile angedeutet ist.

Der Filtriereinsatz 20 enthält einen plattenförmigen, festen Teil 21, der gegenüber dem zu filtrierenden Metall beständig ist, und einen porösen Filterteil 22 eingebettet in den festen Teil 21 durch den der Fluss des geschmolzen Metalles ermöglicht wird. Der poröse Filterteil ist vorzugsweise ein keramischer Schaumfilter, beispielsweise hergeselt nach der U.S.—A—3 962 081. Diese Patentschrift beschreibt einen keramischen Schaumfilter, hergestellt durch Imprägnieren eines Polyurethanschaumes mit einem keramischen Schlicker, trocknen und brennen des imprägnierten Materials, um den Polyurethanschaum zu entfernen und um ein keramisches Schaummaterial in der Form eines Abbildes des ursprünglichen Polyurethanschaumes zu erhalten. Selbstverständlich kann jedes andere poröse Filtermaterial, das den mechanischen und chemischen Erfordernissen entspricht, verwendet werden.

Der poröse Filterteil ist im festen Teil eingebettet. Zweckmässig mit Hilfe eines Dichtungsmaterials 23 zwischen dem Randbereich des porösen Teiles 22 und des festen Teiles 21, um einen dichtenden Sitz des porösen Teiles im festen Teil zu erreichen. Wie in Fig. 1 gezeigt, wird zweckmässig ein runder Filter mit abgeschrägten Randflächen angewendet, passend in eine Oeffnung mit entsprechend abgeschrägter Randfläche im festen Teil.

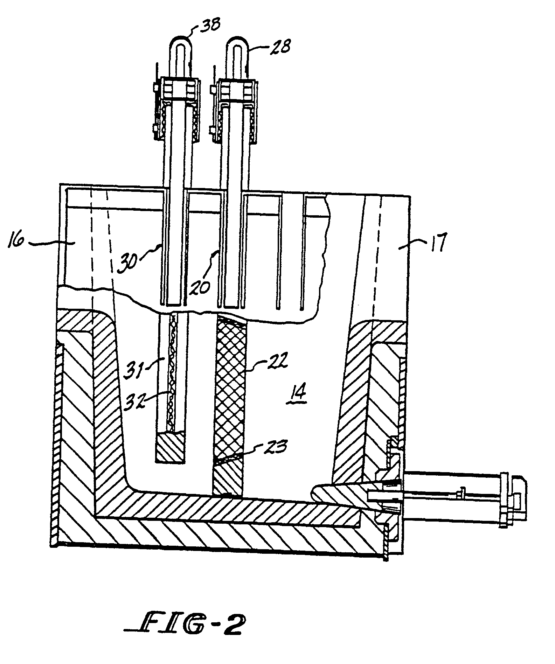

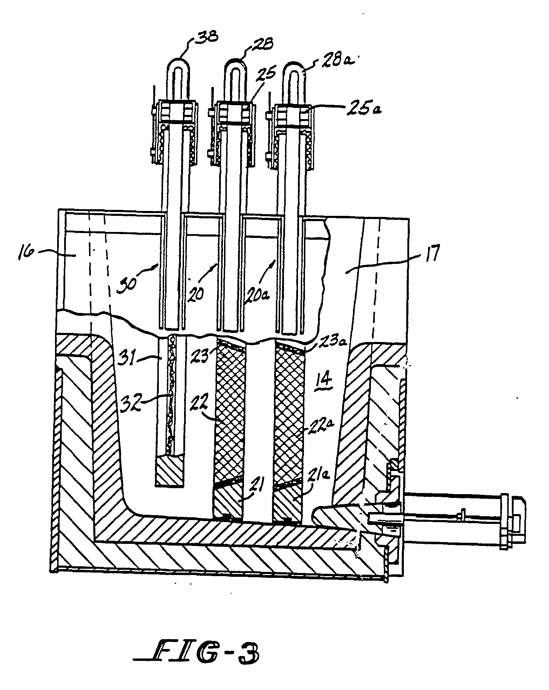

Der feste Teil ist ausgestattet mit einer Dichtung 24, welche die äussere Umgrenzungslinie umgibt und mit einem Trägerteil 25, mit daran angebrachten Stiften 26, passend zu den Führungen 15, um den Filterteil in den Filtertrog 10, in der Art wie in Fig. 2 und 3 gezeigt, einzusetzen. Die gestrichelte Linie 27 zeigt den Eingriff der Stifte 26 in die Mitte der Führungen 15. Wie in Fig. 1 und 2 gezeigt, blockiert der feste Teil 21 die Filkterkammer 14 vollständig, so dass das geschmolzene Metall, das durch die Filterkammer fliesst, gezwungen wird, durch den porösen Teil 22 zu fliessen. Der Trägerteil 25 ist mit Haken 28 ausgestattet, un mittels einer Hebevorrichtung den Filtriereinsatz 20 aus der Filterkammer 14 zu entfernen. Die Materialien der Dichtung 24 können an sich von jeder bekannten Art sein. Beispielsweise können hochtemperaturbeständige kompressible keramische Fasern niedriger Dichte oder andere bekannte Dichtmaterialien, welche die Aufgabe zu erfüllen haben, ein Dichten zwischen den Randflächen des festen Teiles 21 und der Filterkammer 14 und zwischen den Randflächen des porösen Teiles 22 und des festen Teiles 21 zu gewährleisten, angewendet werden.

Es wird bevorzugt, eine Ablenkungsplatte 30, welche einen festen Teil 31, dem geschmolzenen Metall widerstehend, und eine äussere Dichtung 32, umgebend den festen Teil 31, und einen Trägerteil 33, in der gleichen Art wie der Trägerteil 25, aufweist, angewendet. Der Trägerteil 33 ist ebenfalls mit daran befestigten Stiften 34 ausgestattet, welche zu den vordersten Paaren der Führungen 15 passen, in der Art des Filtriereinsatzes 20. Die Ablenkungsplatte 30 passt in das vorderste Paar der Führungen 15 gemäss der gestrichelten Linie 37 und umfasst auch die Haken 38, die zur Entfernung der Ablenkungsplatte dienen. Der Zweck der Ablenkungsplatte ist die Verbesserung der Wärmeverteilung und um das Metall gegen den Boden der Filterkammer zu drängen und auch zu vermeiden, dass aufschwimmende Einschlüsse den Filter erreichen. Deshalb, wie in Fig. 2 und 3 gezeigt, wird die Ablenkungsplatte zwischen Filtriereinsatz 20 und Einlass 16 eingesetzt.

Es ist leicht möglich, in Uebereinstimmung mit vorliegender Erfindung, eine Mehrzahl von Filtriereinsätzen vorzusehen, wie einen zweiten Filtriereinsatz durch Verwendung eines zweiten Filtriereinsatzes 20a (vergl. Fig. 3). Der zweite Filtriereinsatz 20a ist gleich dem Filtriereinsatz 20 und umfasst den festen Teil 21a, den porösen Filtrierteil 22a und das Dichtmaterial 23a, umschliessend den porösen Teil 22a. Desgleichen ist Trägerteil 25a mit Haken 28a ausgestattet, gleich wie der Filtereinsatz 20.

In einer zweckmässigen Ausführungsform wird normalerweise der Filtriereinsatz 20 vor dem Einsetzen in den Filtertrog 10 vorgeheizt. Das ist nicht zwingend notwendig, erwies sich aber als beste Verfahrensmethode. Eine separate Vorheizkammer kann gegenüber dem Filtertrog 10 vorgesehen werden, um die Temperatur der porösen und festen Teile 21, 22 vor dem Einsetzen des Filtriereinsatzes 20 in das geschmolzene Metall anzuheben. Es wurde gefunden, dass das Vorheizen den Temperaturverlust im Metall und den thermischen Schock im Filter 22 reduziert und dass das Angiessen des Filters 22 erleichtert wird. Während des Betriebes wird der Filtriereinsatz 20 zweckmässig in die mittlere Führung 15 des Filtertroges 10 eingesetzt. Deshalb, wenn ein Filterwechsel angezeigt ist, entweder während eines Gusses oder am Ende eines Gusses, wird der zweite vorgeheizte Filtriereinsatz 20a in die in Flussrichtung des Metalles letzten Führungen 15 des Filtertroges 10 eingesetzt. Sobald der in Flussrichtung des Metalles untere Filtereinsatz 20a sicher eingesetzt ist, kann der Filtriereinsatz 20 leicht und bequem aus der Filterkammer 14 entfernt werden, ohne den Guss zu unterbrechen. Wenn es erneut notwendig wird, den Filter 22 zu wechseln, kann ein vorgeheizter Filtriereinsatz 20 dann wieder in die mittleren Führungen 15 eingesetzt werden und der in Flussrichtung des Metalles untere Filtriereinsatz 20a kann daraufhin leicht entfernt werden.

## Patentansprüche

1. Vorrichtung zur Filtration von schmelzflüssigem Metall durch eine Filterkammer (14) in einem Filtertrog (10) mit einem Metalleinlass (16) und einem Metallauslass (17), wenigstens einem entfernbaren, den Konturen der Filterkammer (14) angepassten, zwischen dem Metalleinlass (16) und Metallauslass (17) vertikal angeordneten Filtriereinsatz (20), welcher einen festen plattenartigen, dem schmelzflüssigen Metall widerstehenden und den Fliessweg des Metalls blockierenden Teil (21) und einen darin angebrachten porösen Filterteil (22), der den Durchfluss des schmelzflüssigen Metalles ermöglicht, enthält, dadurch gekennzeichnet, dass der Filtertrog (10) längs auf den Aussenseiten Führungen (15) aufweist und der Filtriereinsatz (20) einen Trägerteil (25) mit Stiften (26) besitzt, die in die Führungen (15) eingreifen.

2. Vorrichtung nach Anspruch 1, dadurch gekennzeichnet, dass der poröse Filterteil (22) ein keramischer Schaumfilter ist.

3. Vorrichtung nach Anspruch 1 oder 2, dadurch gekennzeichnet, dass der poröse Filterteil (22) rund und mit einer abgeschrägten Randfläche versehen ist.

4. Vorrichtung nach Anspruch 1 bis 3, dadurch gekennzeichnet, dass der poröse Filterteil (22) mit einer randständigen Dichtung (23) umschlossen ist.

5. Vorrichtung nach Anspruch 1 bis 4, dadurch gekennzeichnet, dass eine Dichtung (24), die den festen plattenartigen Teil (21) des Filtriereinsatzes (20) umschliesst, zwischen dem Filtriereinsatz (20) und der Filterkammer (14) angeordnet ist.

6. Vorrichtung nach Anspruch 1 bis 5, dadurch gekennzeichnet, dass zwischen dem Metalleinlass (16) und dem Filtriereinsatz (20) eine feste Ablenkplatte (30) angeordnet ist.

7. Vorrichtung nach Anspruch 6, dadurch gekennzeichnet, dass die Ablenkplatte (30) einen Trägerteil (33) mit Stiften (34) aufweist, die in die zwischen dem Metalleinlass (16) und Filtriereinsatz (20) liegenden Führungen (15) eingreifen.

8. Vorrichtung nach Anspruch 1 und/oder Anspruch 6, dadurch gekennzeichnet, dass der/ die Trägerteil(e) (25; 33) Vorrichtungen (28; 38) zum Entfernen des Filtriereinsatzes (20) und/oder der Ablenkplatte (30) aufweist/en.

9. Vorrichtung nach Anspruch 8, dadurch gekennzeichnet, dass die Vorrichtungen (28; 38) Haken sind.

10. Verwendung der Vorrichtung nach Anspruch 1 bis 9 zur Filtration von schmelzflüssigem Aluminium.

## Revendications

1. Dispositif pour la filtration d'un métal en fusion à travers une chambre filtrante (14) située dans une cuve filtrante (10) comportant une entrée (16) du métal et une sortie (17) du métal, au moins une garniture filtrante (20) que l'on peut enlever, qui s'adapte aux contours de la chambre filtrante (14), qui est disposée verticalement entre l'entrée (16) du métal et la sortie (17) du métal et qui contient une partie fixe, en forme de plaque (21), qui s'oppose au métal en fusion et verrouille le chemin d'écoulement du métal et une partie filtrante poreuse (22) qui y est rapportée et permet le passage du métal en fusion,
caractérisé
en ce que la cuve filtrante (10) présente, le long de ses faces extérieures, des guidages (15) et en ce que la garniture filtrante (20) possède une partie support (25) avec des broches (26) qui s'adjustent dans les guidages (15).

2. Dispositif selon la revendication 1, caractérisé en ce que la partie filtrante poreuse (22) est un filtre en mousse de céramique.

3. Dispositif selon la revendication 1 ou 2, caractérisé en ce que la partie filtrante poreuse (22) est ronde et présente une surface de bordure chanfreinée.

4. Dispositif selon les revendications 1 à 3, caractérisé en ce que la partie filtrante poreuse (22) est entourée d'une garniture d'étanchéité (23) continue sur la bordure.

5. Dispositif selon les revendications 1 à 4, caractérisé en ce qu'une garniture d'étanchéité (24), qui entoure la partie fixe en forme de plaque (21) de la garniture filtrante (20), est disposée entre la garniture filtrante (20) et la chambre filtrante (14).

6. Dispositif selon les revendications 1 à 5, caractérisé en ce qu'entre l'entrée (16) du métal et la garniture filtrante (20) est disposée une plaque fixe de déviation (30).

7. Dispositif selon la revendication 6, caractérisé en ce que la plaque de déviation (30) présente une partie support (33) avec des broches (34) qui s'ajustent dans les guidages (15) situés entre l'entrée (16) du métal et la garniture filtrante (20).

8. Dispositif selon la revendication 1 et/ou la revendication 6, caractérisé en ce que la ou les parties supports (25; 33) présentent des dispositifs (28; 38) pour l'enlèvement de la garniture filtrante (20) et/ou de la plaque de déviation (30).

9. Dispositif selon la revendication 8, caractérisé en ce que les dispositifs (28; 38) sont des crochets.

10. Emploi du dispositif selon la revendication 1 à 9 pour la filtration de l'aluminium en fusion.

**Claims**

1. Device for filtering molten metal through a filter chamber (14) in a filter trough (10) having a metal inlet (16) and a metal outlet (17), at least one removable filtration insert (20) which is matched to the contours of the filter chamber (14) and is arranged vertically between the metal inlet (16) and the metal outlet (17) and which comprises a solid plate-like part (21) which resist the molten metal and blocks the flow path of the metal, and a porous filter part (22) arranged therein, which makes the passage of the molten metal possible, characterized in that the filter trough (10) has guides (15) along the outer sides and the filtration insert (20) has a carrier part (25) with pins (26) which engage in the guides (15).

2. Device according to Claim 1, characterized in that the porous filter part (22) is a ceramic foam filter.

3. Device according to Claim 1 or 2, characterized in that the porous filter part (22) is circular and is provided with a sloping peripheral face.

4. Device according to Claims 1 to 3, characterized in that the porous filter part (22) is surrounded with a continuous peripheral seal (23).

5. Device according to Claims 1 to 4, characterized in that a seal (24), which surrounds the solid plate-like part (21) of the filtration insert (20), is arranged between the filtration insert (20) and the filter chamber (14).

6. Device according to Claims 1 to 5, characterized in that a solid deflection plate (30) is arranged between the metal inlet (16) and the filtration insert (20).

7. Device according to Claim 6, characterized in that the deflection plate (30) has a carrier part (33) with pins (34) which engage in the guides (15) situated between the metal inlet (16) and the filtration insert (20).

8. Device according to Claim 1 and/or Claim 6, characterized in that the carrier part(s) (25; 33) has/have devices (28; 38) for removing the filtration insert (20) and/or the deflection plate (30).

9. Device according to Claim 8, characterized in that the devices (28; 38) are hooks.

10. Use of the device according to Claims 1 to 9 for filtering molten aluminium.

FIG-1

FIG-2

FIG-3

3